# EUROPEAN PATENT APPLICATION

(11) **EP 2 963 932 A1**
(43) Date of publication of application: **06.01.2016**
(21) Application number: 15174885.2
(22) Date of filing: 01.07.2015
(51) Int. Cl.: H04N 21/418, H04N 21/436

(54) **A STANDARD COMPATIBLE TELEVISION DISTRIBUTION SYSTEM**

(30) Priority: 01.07.2014 GB 201411721
(71) Applicant: Rabbit Labs SAS, 84300 Cavaillon (FR)
(72) Inventor: GAUTIER, Gilles, 84300 Taillades (FR)
(74) Representative: Sackin, Robert

(57) **Abstract**

A standard compatible television distribution system (such as CI Plus or CableCARD compatible) comprises a first housing (200) and a second housing (201). The first housing (200) is spaced apart from the second housing (201). The first housing (200) includes an input (100) and an output (203). The input (100) is configured to input a data transport stream forming an input data stream. The output (203) is configured to output a data stream to the second housing (201) forming an intermediate data stream that is an at least in part encrypted data transport stream decryptable by a television terminal decrypter (108) for the standard derived from the input data stream. The second housing (201) forms a television standard-compatible terminal module. It includes an input and an output. The input is configured to input the intermediate data stream. The output is configured to output to a television terminal for the standard comprising a television terminal decrypter (108) for the standard: an at least in part encrypted data transport stream decryptable by the television terminal decrypter (108) for the standard derived from the input data stream; and an encryption secret for decrypting the at least in part encrypted data transport stream.

## Description

### FIELD OF THE INVENTION

The present invention relates to a standard compatible television distribution system. Embodiments of the invention relate to a digital data distribution system, a digital data distribution method, an encrypter, a computer program, and a computer-readable medium.

### BACKGROUND OF THE INVENTION

Digital media is often distributed in encrypted form to terminals (for example digital televisions) to enable management of the access to the media. In a typical system, a number of components are required at each terminal to decrypt the data sent to that terminal and to implement the Conditional Access System (CAS) to manage the entitlements of that terminal.

The CI Plus specification (published by CI Plus LLP) defines module interfaces that allow these functions to be implemented in a module that can be connected to a compatible terminal by the consumer. The media data is encrypted when communicated between the module and the television to ensure that it cannot be usefully intercepted.

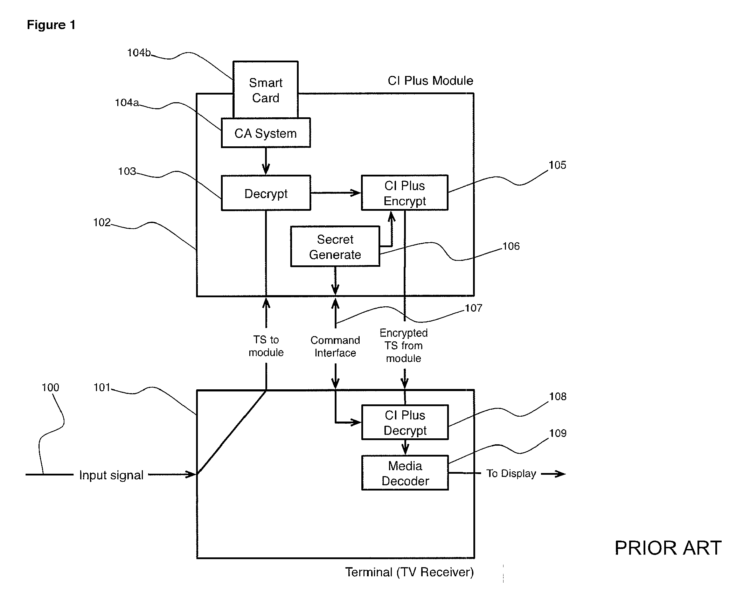

Figure 1 illustrates a typical configuration of a TV Receiver with a CI Plus module. The input signal 100, for example a digital satellite direct to home broadcast, is received by the terminal 101 for example a digital TV receiver. This signal 100 carries digital media in for example an MPEG Transport Stream. This data is delivered to the CI Plus module 102. The digital media carried in the input signal is typically protected via a proprietary content protection scheme. The decrypter 103 decrypts the digital media when enabled by the conditional access system 104a for this proprietary content protection scheme. Typically, the conditional access system will involve a smart card 104b.

The CI Plus specification describes standard mechanisms for protecting digital media when it is transferred from the CI Plus module 102 back to the terminal 101. This protection comprises encryption 105, encryption secret generation 106 and secure communication of the encryption secret via the command interface 107 to the terminal 101 and decryption 108 in the terminal. The CI Plus decryption 108 delivers media data to the media decoder 109. In summary the CI Plus specification allows a module to provide adaptation between a proprietary media protection used in the input signal and a standardized media protection that compliant terminals implement.

### BRIEF SUMMARY OF THE INVENTION

The inventors of the arrangement described herein are the first to appreciate that by effectively splitting the electronics or functionality of a television standard compatible terminal module that is, for example CI Plus or CableCARD compatible, between two spaced apart housings that there are considerable benefits as described below.

The invention in its various aspects is defined in the independent claims below to which reference should now be made. Advantageous features are set forth in the dependent claims.

Arrangements are described in more detail below and take the form of a standard compatible (such as CI Plus or CableCARD compatible) television distribution system that comprises a first housing and a second housing. The first housing is spaced apart from the second housing. The first housing includes an input and an output. The input is configured to input a data transport stream forming an input data stream. The output is configured to output a data stream to the second housing forming an intermediate data stream that is an at least in part encrypted data transport stream decryptable by a television terminal decrypter for the standard derived from the input data stream. The second housing forms a television standard-compatible terminal module. It includes an input and an output. The input is configured to input the intermediate data stream. The output is configured to output to a television terminal for the standard comprising a television terminal decrypter for the standard: an at least in part encrypted data transport stream decryptable by the television terminal decrypter for the standard derived from the input data stream; and an encryption secret for decrypting the at least in part encrypted data transport stream.

Examples of the present invention allow the broadcast reception CAS and decryption functions to be implemented in a sub-system shared by multiple terminals; a CAS is efficiently extended to multiple receivers. In the examples described, a simple CI Plus module is attached to each terminal to enable secure delivery of media from the shared sub-system to the terminals.

Examples of the present invention provide benefits in situations where multiple terminals are used in the same establishment, for example, in the same hotel or the same hospital. Many fewer CAS smart cards need to be deployed as only a small number are required in the shared sub-system rather than one per terminal.

The shared sub-system (and hence the CAS smart cards) can be in a secure location or enclosure to limit opportunity for theft by staff or guests.

The simplified module and in particular, CI Plus module described, is only usable in this context thus reducing the motivation for theft and the consequences if theft occurs.

A separation is created between the customer management implemented using the broadcast CAS described herein and the management of the services made available to the terminals at a particular location.

Media data from other sources may be introduced at the shared sub-system and delivered with the same protection.

Embodiments of the present invention may also have the following advantages. They may use a much reduced number of smart cards, these smart cards may be stored in a secure place, the CAM in the TV cannot be used elsewhere if stolen, and the shared system may also manage individually and locally which secure receiver 205 (described below) are entitled to receive specific programmes.

In an aspect of the present invention, there is provided a television standard compatible terminal module for interfacing with a television terminal compatible with the standard, the module comprising: a receiver configured to receive a first at least in part encrypted data transport stream decryptable by a television terminal decrypter for the standard of a television terminal, wherein the at least in part encrypted data transport stream comprises either no encryption secret or an encrypted encryption secret for decrypting the at least in part encrypted data transport stream; and an output for outputting to a television terminal for the standard comprising the television terminal decrypter for the standard: a second at least in part encrypted data transport stream decryptable by the television terminal decrypter for the standard derived from the first at least in part encrypted data stream; and an encryption secret for decrypting the second at least in part encrypted data transport stream.

The standard may comprise CI Plus or CableCARD (registered trade mark).

The module may comprise a store configured to store the encryption secret.

The first at least in part encrypted data transport stream received at the receiver may comprise an encrypted encryption secret and the module further comprises an encryption secret extractor configured to extract the encrypted encryption secret from the first at least in part encrypted data transport stream.

An encryption secret for decrypting the at least in part encrypted data transport stream may be received by the receiver separately from the first at least in part encrypted data stream. The module may further comprise a decrypter for decrypting the encrypted encryption secret.

The first at least in part encrypted data stream may be configured to provide permission to at least one particular standard compatible terminal module to access at least a portion of the data of the first at least in part encrypted data stream. The at least a portion may comprise one or more television channel.

The encryption secret may comprise an encryption key.

The television standard compatible terminal module may comprise no decrypter for decrypting the first at least in part encrypted data transport stream. The television standard compatible terminal module may comprise no encrypter for encrypting to the second at least in part encrypted data transport stream.

The second at least in part encrypted data transport stream decryptable by the television terminal decrypter for the standard may be derived from the first at least in part encrypted data stream by being the same as the first at least in part encrypted data transport stream.

The first at least in part encrypted data transport stream decryptable by a television terminal decrypter for the standard of a television terminal may be encrypted in a different way to the a second at least in part encrypted data transport stream decryptable by the television terminal decrypter. The second at least in part encrypted data transport stream decryptable by the television terminal decrypter for the standard is derived from the first at least in part encrypted data stream by performing a trivial encryption operation such as a single step operation, for example an exclusive or, XOR, logic operation with a secret on the first at least in part encrypted data transport stream or the like.

In another aspect of the present invention, there is provided a device for transmitting a television standard compatible data stream to a television standard compatible television, the device comprising: an input configured to input a data transport stream in the form of a received television broadcast; an encrypter configured to encrypt, at least in part, the data transport stream to form an at least in part encrypted data transport stream decryptable by a television standard compatible television terminal decrypter; and a transmitter configured to transmit the at least in part encrypted data transport stream to a television standard compatible television terminal, spaced from the device, and comprising the television terminal decrypter for the standard.

The device may further comprise a modulator configured to modulate the at least in part encrypted data transport stream and wherein the transmitter is configured to transmit the modulated at least in part encrypted data transport stream.

The device may further comprise a secret attacher configured to attach a secret for decrypting the at least in part encrypted data transport stream to the at least in part encrypted data stream. The secret may comprise an encryption key. The device may further comprise an encrypter to encrypt the secret.

The data transport stream may further comprises a local source of at least one media stream.

The television standard may comprise CI Plus or CableCARD (registered trade mark).

The device may be further configured to provide an indication of permission to at least one particular standard compatible terminal module to access at least a portion of the data of the at least in part encrypted data stream. The at least one portion may comprise one or more television channel.

The transmitter may comprise a wireless transmitter. The transmitter may comprise a television broadcast transmitter.

A housing may comprise more than one of the devices.

In a further aspect of the present invention, there is provided a standard compatible television distribution system, the system comprising a first housing and a second housing, wherein the first housing is spaced apart from the second housing; and wherein: the first housing includes: an input configured to input a data transport stream forming an input data stream; and an output to output a data stream to the second housing forming an intermediate data stream that is an at least in part encrypted data transport stream decryptable by a television terminal decrypter for the standard derived from the input data stream; the second housing forming a television standard-compatible terminal module and including: an input configured to input the intermediate data stream; and an output for outputting to a television terminal for the standard comprising a television terminal decrypter for the standard: an at least in part encrypted data transport stream decryptable by the television terminal decrypter for the standard derived from the input data stream; and an encryption secret for decrypting the at least in part encrypted data transport stream.

In an aspect of the present invention, there is provided a television standard compatible terminal module for interfacing with a television terminal compatible with the standard, the module comprising: a receiver configured to receive an at least in part encrypted data transport stream decryptable by a television terminal decrypter for the standard of a television terminal, wherein the at least in part encrypted data transport stream comprises either no encryption secret or an encrypted encryption secret for decrypting the at least in part encrypted data transport stream; and an output for outputting to a television terminal for the standard comprising the television terminal decrypter for the standard: the at least in part encrypted data transport stream decryptable by the television terminal decrypter for the standard derived; and an encryption secret for decrypting the at least in part encrypted data transport stream.

In an aspect of the present invention, there is provided a method of operating a television standard compatible terminal module for interfacing with a television terminal compatible with the standard, the method comprising: the module receiving a first at least in part encrypted data transport stream decryptable by a television terminal decrypter for the standard of a television terminal, wherein the at least in part encrypted data transport stream comprises either no encryption secret or an encrypted encryption secret for decrypting the at least in part encrypted data transport stream; and the module outputting to a television terminal for the standard comprising the television terminal decrypter for the standard: a second at least in part encrypted data transport stream decryptable by the television terminal decrypter for the standard derived from the first at least in part encrypted data stream; and an encryption secret for decrypting the second at least in part encrypted data transport stream.

In another aspect of the present invention, there is provided a method of transmitting a television standard compatible data stream to a television standard compatible television, the method comprising: inputting into a device a data transport stream in the form of a received television broadcast; an encrypter of the device encrypting, at least in part, the data transport stream to form an at least in part encrypted data transport stream decryptable by a television standard compatible television terminal decrypter; and a transmitter of the device transmitting the at least in part encrypted data transport stream to a television standard compatible television terminal, spaced from the device, and comprising the television terminal decrypter for the standard.

In an aspect of the present invention, there is provided a standard compatible television distribution method, the method comprising: inputting into an input of a first housing a data transport stream forming an input data stream; and outputting from an output of the first housing a data stream to a second housing forming an intermediate data stream that is an at least in part encrypted data transport stream decryptable by a television terminal decrypter for the standard derived from the input data stream; and inputting into an input of a second housing forming a television standard-compatible terminal module the intermediate data stream, wherein the first housing is spaced apart from the second housing; and outputting from an output of the second housing to a television terminal for the standard comprising a television terminal decrypter for the standard: an at least in part encrypted data transport stream decryptable by the television terminal decrypter for the standard derived from the input data stream; and an encryption secret for decrypting the at least in part encrypted data transport stream.

A computer program may be provided for carrying out the method described above.

A computer-readable medium may be provided containing a set of instructions that causes a computer to perform the method described above. The computer-readable medium may be, for example, a CD-ROM, a DVD-ROM or a solid state memory such as a USB stick.

### BRIEF DESCRIPTION OF THE DRAWINGS

The invention will be described in more detail by way of example with reference to the accompanying drawings, in which:
Figure 1 (prior art) is a schematic diagram illustrating the known elements and data flows in a known CI Plus module and a known Terminal such as a digital TV Receiver; and
Figure 2 is a schematic diagram illustrating an example of a standard compatible television distribution system embodying an aspect of the present invention.

Where numeric references in the figures use the same value they represent corresponding items.

### DESCRIPTION OF EXAMPLES OF THE INVENTION

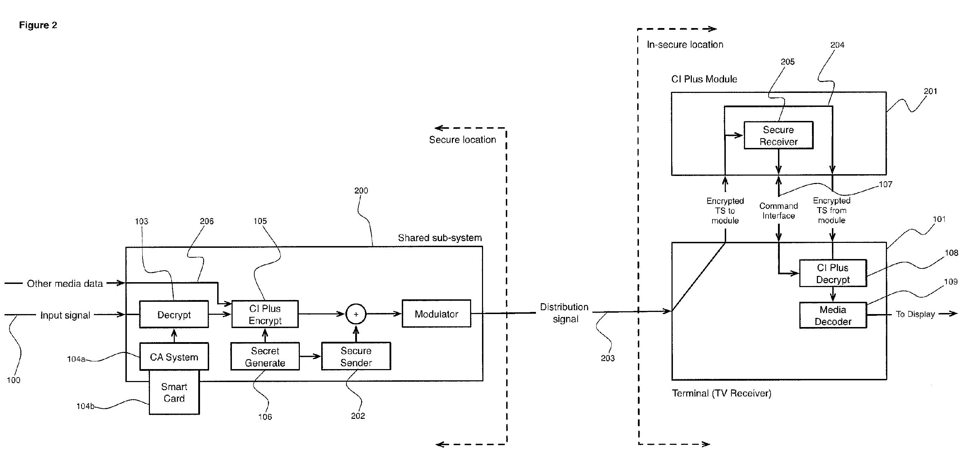

Figure 2 illustrates an example standard compatible (CI Plus standard compatible) television distribution system of the present invention and a method of implementing it. The distribution system includes a device or shared sub-system 200 in a first housing for transmitting a television standard compatible data stream to a television standard compatible television terminal 101 and a television standard compatible terminal module 201 in a second housing, spaced apart or separated from the first housing, for interfacing with the television terminal compatible with the standard. The first housing may include more than one of the devices illustrated in Figure 2 with each one receiving an input data stream from a different source.

In the example of Figure 2, the majority of the functions in the prior art example shown in Figure 1 are implemented in the shared sub-system that forms a device for transmitting a television standard compatible data stream to a television standard compatible television. This allows the television standard compatible terminal module in this example in the form of a CI Plus module to be greatly simplified. The shared sub-system will typically be located securely to prevent theft or tampering.

In the example of Figure 2, the input signal 100 in the form of a data transport stream such as a received television broadcast is received by the shared sub-system 200 at an input. This shared sub-system 200 receives then decrypts media data 103 of the television broadcast when enabled by the conditional access system 104a and smart card 104b. The CI Plus encrypter 105 then encrypts this data (at least in part) using the encryption secret provided by the encryption secret generator 106. The shared sub-system generates a distribution signal 203 or intermediate data stream that is transmitted by a transmitter to one or more terminals 101. Significantly, as described above, this means that a single shared sub-system may be used or shared by a plurality of CI Plus Modules 201. The distribution signal 203 may use a different transport mechanism to the original input signal 100. For example, the broadcast signal 100 may be a satellite signal and the distribution signal 203 may be transmitted by a transmitter in the form of a television broadcast transmitter using terrestrial or cable modulation, in which case the shared sub-system includes a modulator configured to modulate the at least in part encrypted data transport stream for transmission by the transmitter. Alternatively or additionally, the input may be other media data 206 for which the media data requires protection before distribution to the terminals. In other words, the input is connected to a local source of at least one media stream. In this variant, the media data may be introduced directly to the CI Plus encrypter 105. The at least in part encrypted data stream or distribution signal may be configured to provide permission to at least one particular standard compatible terminal module to access at least a portion of the data of the first at least in part encrypted data stream. This may be one or more television channel.

The CI Plus module 201 in Figure 2 is much simpler than the CI Plus module 102 in the prior art arrangement of Figure 1. In the module 201, the Transport Stream simply passes through the module 204. No decryption and re-encryption is required as this was previously performed in the shared sub-system 200. Thus, in one example arrangement, the CI Plus module 201 comprises neither an encrypter for decrypting the distribution signal nor a decrypter for decrypting the distribution signal.

The following example arrangement is used to securely communicate the encryption secret from the shared sub-system 200 to the module 201. A secure sender or secret attacher 202 in the shared sub system cryptographically protects the encryption secret and packages it in data that is included in the distribution signal 203. In other words, the secret attacher attaches a secret, in this example an encryption key, for decrypting the at least in part encrypted data transport stream to the at least in part encrypted data stream.

A secure receiver 205 of the CI Plus module receives and extracts this data from the distribution signal 203 and extracts from the cryptographic protection the encryption secret. In other words, the at least in part encrypted data transport stream received at the receiver comprises an encrypted encryption secret and the CI Plus module further comprises an encryption secret extractor configured to extract the encrypted encryption secret from the first at least in part encrypted data transport stream. The encryption algorithms and encryption secrets employed by secure sender 202 and secure receiver 205 ensure that only authorized modules can receive the encryption secret. This allows the set of authorised modules and the media presentation entitlements to be managed by suitable configuration of the secure sender 202. The secure encryption secret data may be transported between secure sender 202 and secure receiver 205 in the distribution signal 203 as illustrated. Alternatively, other transport mechanisms may be used. For example, a ZigBee wireless link may be used between shared sub-system 200 and module 201. The encryption secret for decrypting the at least in part encrypted data transport stream may be transmitted separately and received by the receiver separately from the first at least in part encrypted data stream. The CI Plus module may have a store or memory, such as solid state memory, configured to store the encryption secret. The store may either have no communication links with the shared sub-system, in which case the encryption secret is input into the CI Plus module directly. The store may also store the encryption secret input from the shared sub-system.

In the example of Figure 2, the encryption secret extracted by the secure receiver 205 is delivered to the terminal 101 via the standard CI Plus mechanism 107 as described above with reference to Figure 1. As in Figure 1 within the terminal the standard CI Plus decryption 108 decrypts the media data and delivers it to the media decoder 109 of the standard compatible terminal or television.

The at least in part encrypted data transport stream decryptable by the television terminal decrypter for the standard may be derived from or related to the distribution signal by being the same as it. Alternatively, they may be encrypted in a different way. For example, the at least in part encrypted data transport stream decryptable by the television terminal decrypter for the standard may be derived from the distribution signal by performing a trivial encryption operation such as a single step operation, for example an exclusive or, XOR, logic operation with a secret on the distribution signal.

CI Plus allows a CI Plus module to securely update the decryption secrets used by the decrypter 108. In an example of the present invention, the update mechanism may be used to set the decryption secret appropriately for the content that the terminal has been instructed to present by the user. This allows different secrets to be used for different media data and hence enables cryptographic control of the media available for presentation at a particular terminal.

Examples of the invention reduce the cost and complexity of protecting the delivery of digital media to a collection of terminals as the majority of the functionality is implemented just once in a sub-system whose output is shared with many terminals that are enabled via a much less complex module.

Embodiments of the present invention have been described. It will be appreciated that variations and modifications may be made to the described embodiments within the scope of the present invention.

## Claims

1. A television standard compatible terminal module for interfacing with a television terminal compatible with the standard, such as CI Plus or CableCARD (registered trade mark), the module comprising:
a receiver configured to receive a first at least in part encrypted data transport stream decryptable by a television terminal decrypter for the standard of a television terminal, wherein the at least in part encrypted data transport stream comprises either no encryption secret or an encrypted encryption secret for decrypting the at least in part encrypted data transport stream; and
an output for outputting to a television terminal for the standard comprising the television terminal decrypter for the standard: a second at least in part encrypted data transport stream decryptable by the television terminal decrypter for the standard derived from the first at least in part encrypted data stream; and an encryption secret for decrypting the second at least in part encrypted data transport stream.

2. A television standard compatible terminal module according to claim 1, wherein the module comprises a store configured to store the encryption secret.

3. A television standard compatible terminal module according to any preceding claim, wherein the first at least in part encrypted data transport stream received at the receiver comprises an encrypted encryption secret and the module further comprises an encryption secret extractor configured to extract the encrypted encryption secret from the first at least in part encrypted data transport stream or wherein an encryption secret for decrypting the at least in part encrypted data transport stream is received by the receiver separately from the first at least in part encrypted data stream and wherein the module may further comprise a decrypter for decrypting the encrypted encryption secret.

4. A television standard compatible terminal module according to any preceding claim, wherein the first at least in part encrypted data stream is configured to provide permission to at least one particular standard compatible terminal module to access at least a portion of the data of the first at least in part encrypted data stream, wherein the at least a portion may comprise one or more television channels.

5. A television standard compatible terminal module according to any preceding claim, wherein the encryption secret comprises an encryption key.

6. A television standard compatible terminal module according to any preceding claim, wherein the television standard compatible terminal module comprises no decrypter for decrypting the first at least in part encrypted data transport stream and/or wherein the television standard compatible terminal module comprises no encrypter for encrypting to the second at least in part encrypted data transport stream.

7. A television standard compatible terminal module according to any preceding claim, wherein the second at least in part encrypted data transport stream decryptable by the television terminal decrypter for the standard is derived from the first at least in part encrypted data stream by being the same as the first at least in part encrypted data transport stream or wherein the second at least in part encrypted data transport stream decryptable by the television terminal decrypter for the standard may be derived from the first at least in part encrypted data stream by performing a trivial encryption operation such as a single step operation, for example an exclusive or, XOR, logic operation with a secret on the first at least in part encrypted data transport stream or the like.

8. A television standard compatible terminal module according to any of claims 1 to 7, wherein the first at least in part encrypted data transport stream decryptable by a television terminal decrypter for the standard of a television terminal is encrypted in a different way to the a second at least in part encrypted data transport stream decryptable by the television terminal decrypter.

9. A device for transmitting a television standard compatible data stream to a television standard compatible television, wherein the standard may be CI Plus or CableCARD (registered trade mark), the device comprising:
an input configured to input a data transport stream in the form of a received television broadcast;
an encrypter configured to encrypt, at least in part, the data transport stream to form an at least in part encrypted data transport stream decryptable by a television standard compatible television terminal decrypter; and
a transmitter configured to transmit the at least in part encrypted data transport stream to a television standard compatible television terminal, spaced from the device, and comprising the television terminal decrypter for the standard.

10. A device according to claim 9, further comprising a modulator configured to modulate the at least in part encrypted data transport stream and wherein the transmitter is configured to transmit the modulated at least in part encrypted data transport stream.

11. A device according to claim 9 or claim 10, further comprising a secret attacher configured to attach a secret for decrypting the at least in part encrypted data transport stream to the at least in part encrypted data stream, wherein the secret may comprise an encryption key and/or the device may further comprise an encrypter to encrypt the secret.

12. A device according to any of claims 9 to 11, wherein the data transport stream further comprises a local source of at least one media stream.

13. A device according to any of claims 9 to 12, further configured to provide an indication of permission to at least one particular standard compatible terminal module to access at least a portion of the data of the at least in part encrypted data stream, wherein the at least one portion may comprise one or more television channel.

14. A standard compatible television distribution system, the system comprising a first housing and a second housing, wherein the first housing is spaced apart from the second housing; and wherein:
the first housing includes:
an input configured to input a data transport stream forming an input data stream; and
an output to output a data stream to the second housing forming an intermediate data stream that is an at least in part encrypted data transport stream decryptable by a television terminal decrypter for the standard derived from the input data stream;
the second housing forming a television standard-compatible terminal module and including:
an input configured to input the intermediate data stream; and
an output for outputting to a television terminal for the standard comprising a television terminal decrypter for the standard: an at least in part encrypted data transport stream decryptable by the television terminal decrypter for the standard derived from the input data stream; and an encryption secret for decrypting the at least in part encrypted data transport stream.

15. A television standard compatible terminal module for interfacing with a television terminal compatible with the standard, the module comprising:
a receiver configured to receive an at least in part encrypted data transport stream decryptable by a television terminal decrypter for the standard of a television terminal, wherein the at least in part encrypted data transport stream comprises either no encryption secret or an encrypted encryption secret for decrypting the at least in part encrypted data transport stream; and
an output for outputting to a television terminal for the standard comprising the television terminal decrypter for the standard: the at least in part encrypted data transport stream decryptable by the television terminal decrypter for the standard derived; and an encryption secret for decrypting the at least in part encrypted data transport stream.
